# EUROPEAN PATENT SPECIFICATION

(11) **EP 1 810 780 B1**
(45) Date of publication and mention of the grant of the patent: **27.01.2010**
(21) Application number: 05773908.8
(22) Date of filing: 06.07.2005
(51) Int. Cl.: B23Q 7/04, B25J 18/00, B25J 9/04, B25J 9/10

(54) **PART-HANDLING DEVICE AND INDUSTRIAL HANDLER COMPRISING SAID DEVICE**
TEILEHANDHABUNGSVORRICHTUNG UND TECHNISCHE HANDHABUNGSVORRICHTUNG MIT DER VORRICHTUNG
DISPOSITIF DESTINE A LA MANIPULATION DE PIECES ET MANIPULATEUR INDUSTRIEL EQUIPE DUDIT DISPOSITIF

(30) Priority: 15.07.2004 ES 200401778
(43) Date of publication of application: 25.07.2007
(73) Proprietor: ASEA BROWN BOVERI, S.A., 28037 Madrid (ES)
(72) Inventor: CORTES GRAU, Francisco, 08192 Sant Quirze del Vallès (Barcelona) (ES); CASANELLES MOIX, Ramón, 08192 Sant Quirze del Vallès (Barcelona) (ES)
(74) Representative: Gislon, Gabriele
(86) International application number: PCT/ES2005/000388
(87) International publication number: WO 2006/018459

(56) References cited:
- EP-A1- 0 022 332
- EP-A2- 0 269 333
- EP-A2- 0 358 928
- EP-A2- 0 488 946
- WO-A-01/36165
- DE-A1- 3 344 903
- JP-A- 58 066 603
- JP-A- 2001 030 190
- US-A- 5 938 400

## Description

The present invention relates to a device used to handle parts, for example for loading and unloading parts onto a press line. The device is intended to be coupled to an industrial handler, such as an articulated robot, that presents a kinematic chain between a base and an end element.

### Background to the invention

Currently, various types of industrial handlers are known to be used in a broad range of applications.

For example, it is common to use robots and other handlers on press lines used to manufacture vehicle bodywork parts: the handlers are responsible for loading and unloading the parts between one press and another, a store room and a press, etc.

One type of handler which is frequently used because of its ability to adapt to a great variety of different movements and cycles, is articulated robots, for example robots with four or six degrees of freedom; each degree of freedom is an independent movement (turn or displacement) that one articulation can make with respect to the preceding one.

Another type of handler used on press lines are the so-called "Doppins", which generally consist of a structure attached to the press and equipped with a guide on which a cart travels vertically; the cart is fitted with a system of articulated arms, which is responsible for the movement of entering and exiting the press for loading or unloading parts.

On all handlers, an end element is installed on the system's free end, which in the case of press maintenance is a gripping element adapted to the parts to be loaded and unloaded; this gripping element is usually called a "gripper", and can use either a mechanical, electromagnetic or vacuum gripping system, depending on each case's specific requirements.

There may be different handling configurations between one station and another of a press line: for example, a single handler that extracts the part from one station and introduces it into another one, or a pair of handlers, one for unloading from one station and another one for loading it onto the following station, with or without the interposition of conveyor belts, rotatory mechanisms, etc.

In all cases, on press lines, as in most industrial operations, it is advisable to minimise cycle times; where handlers are concerned, an important part of the cycle is the extraction or insertion of the part in relation to the press's area of influence, since during this phase the press must remain open, and therefore, inactive; consequently, it is advisable to extract and insert the part quickly.

What follows is a discussion of this problem, by way of example, with reference to an articulated robot that extracts a part from one press and inserts it into the following one.

There are basically two cycles that an articulated six-axis robot, with a gripper attached to its sixth axis, can perform for this operation.

In one cycle, usually called the "external" cycle, the robot first extracts the gripper holding the part from the press following a rectilinear trajectory in parallel to the press line, through combined turns around the first three axes; secondly, it makes the gripper turn with regard to the 4^{th} and 6^{th} axes to leave it facing the following press; and finally, it inserts the part into the press following a rectilinear trajectory.

The advantage of this type of cycle is that the partial extraction and insertion times are relatively short, because the movements are linear; however, the overall cycle time is fairly long.

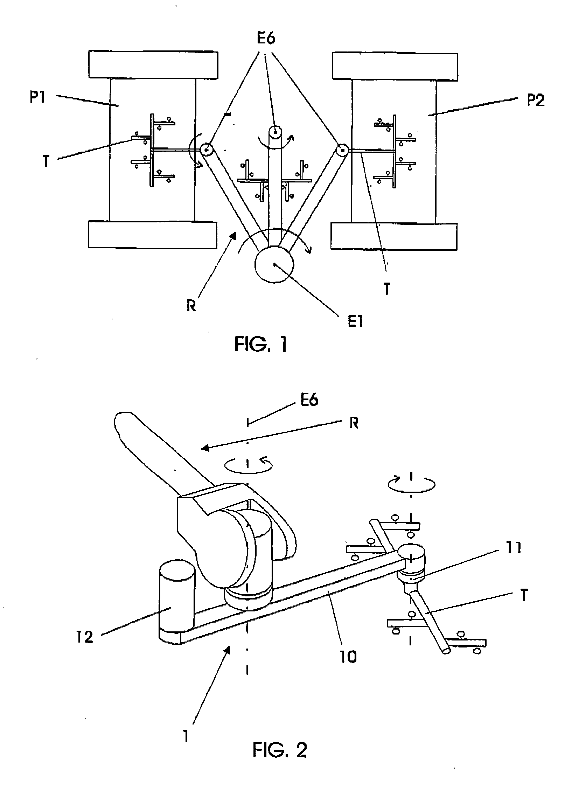

In an alternative cycle, usually called an "internal" cycle, which can be seen in figure 1, the robot maintains its arm extended and through simultaneous turns with regard to the 1^{st} and 6^{th} axes makes the gripper with the part perform a single movement with a trajectory, essentially horizontal, which occurs between the 6^{th} axis and the base of the robot; however, due to the rotation around the 6^{th} axis, the part turns during the extraction and the insertion in the presses.

The overall cycle time in this case is relatively small, due to the fact that the robot performs a single movement; however, the partial extraction and insertion times for the parts are high, because the part's turn makes a section of it remain longer under the press. Another inconvenience of turning the part during the extraction and the insertion in the presses is that the obstacles represented by the press columns themselves must be taken into account, which can make the gripper's turning with the part difficult.

For certain, conventional solutions for loading and unloading from presses present limitations when it comes to in reducing cycle times.

Moreover, in both cases, the part is turned 180° when passing from one press to another.

In recent years, some devices or accessories have been proposed intended to be coupled with the 6^{th} axis of an articulated robot, which partially resolve these problems.

European patent application EP666150A1 describes a mechanism that is coupled to the robot's wrist and displaces the turn of the 6^{th} axis to the end of a rigid bar. This mechanism makes it possible to maintain the part's s orientation as it passes from one press to another, and makes a linear extraction and insertion movement; however, the robot is forced to retract considerably for this movement, which makes it fairly slow, especially if the distance between presses is large. Another inconvenience of this mechanism is that, due to the fact that there is no possibility of turn around the robot's 6^{th} axis, to enter the press laterally the bar must be fairly long, and this causes problems of weight, rigidity and similar.

Another known device includes two bars articulated to each other by their ends; a first bar is coupled by its other end to the robot's 6^{th} axis, while the other end of the second bar is coupled to the gripper for the part to be handled. There is a motor on the articulation between the two bars, which makes it possible to action the gripper's rotation in relation to the second bar.

This system makes it possible to transfer the part with an internal turn, such as the one represented in figure 1, but with linear extraction and insertion into the presses, since the combination of rotations around the different axes makes it possible to rotate the gripper holding the part in the opposite sense to the robot arm's turn during the phases of extraction or insertion, thus maintaining the part's orientation, and performing an approximately linear movement between one press and another.

Nonetheless, this system is relatively complex, because it implies two bars articulated to each other, with the ensuing inconveniences concerning the assembly's rigidity.

At the same time, and irrespective of the robot's movements, it is also advisable to ensure that the gripper is of limited height, in order to be able to partially overlap the press's opening and closing movements with the part's insertion and extraction; and it is also desirable, in terms of safety and savings, that the gripper and any other part of the handler which penetrates within the press's area of influence are made of light low-hardness materials, compatible with their function, in order to minimise as much as possible any damage to the press in the event of an accident.

In the described system with two articulated bars, the rigidity requirements make it difficult to reduce the height of the assembly; moreover, the articulation with the motor penetrates within the press's area of influence, with the consequent risk of significant damage in the event of an accident.

WO-A-0 136 165 and JP-A-2001 030 190 both disclose a device for handling parts, comprising a rigid arm provided with coupling means for coupling the device for an industrial handler, a support rotatably mounted on the rigid arm and designed to be coupled to a gripping element for the parts to be handled, and driving means for rotating the support in relation to the rigid arm, said driving means comprising a motor and a transmission through the lenght of the arm. In JP-A-2001 030 190, the motor is mounted on the rigid arm near the coupling means, between the coupling means and the support.

### Description of the invention

The purpose of the present invention is to reduce the inconveniences of the technique described above, by providing means to minimise the partial extraction and insertion times from the press without increasing the overall cycle times, in a technically advantageous manner in terms of safety and reliability.

In line with this objective, this invention provides a device for handling parts according to claim 1.

The device's characteristics make it possible to provide the handler with an additional degree of freedom, through which the parts can be extracted and inserted into work stations, such as presses, with a linear movement, and consequently in a reduced time, in a manner also compatible with a reduced overall time; moreover, this is done in a mechanically simple and reliable way, with the possibility of avoiding the penetration of very hard or voluminous parts inside the work stations.

Preferably, the rigid arm is designed to rotate in unison with the handler's end element; in this way, the arm can remain parallel to the line that joints the presses during the handler's turning movement from one press to another.

The support's turn with respect to the arm makes it possible for the gripper holding the part to maintain its orientation during the turn of the handler's end element.

The motor's installation near the handler, with the coupling means located between the support and the motor, prevents it from penetrating under the press's zone of influence.

The invention also refers to an industrial handler which presents a kinematic chain between a base and an end element, **characterised in that** it comprises a device of the type described above, linked to said end element.

Preferably, the handler comprises an articulated robot of at least two axes.

### Brief description of the drawings

To contribute to a better understanding of what has been described, we enclose some drawings which, schematically and only by way of a non-restrictive illustration, represent a practical embodiment of the invention.

In the drawings:
- Figure 1: is a schematic plan view of a handler in accordance with the prior art, ready to transfer a part between two presses;
- Figure 2: is a perspective plan view of a device in accordance with a first embodiment of the invention;
- Figure 3: is a scheme showing the movement of a handler with the device of figure 2;
- Figure 4: is an elevation schematic view of a device for handling parts which is not part of the present invention; and
- Figure 5: is a schematic plan view showing the movement of a handler with the device of figure 4.

### Description of the preferred embodiments

Figure 1 represents the state of the art and shows a plan view of two presses P1 and P2, between which a part must be transferred (not shown) using a robot R, for example a six-axis articulated robot such as the one described in patent application EP666150A1.

A handler, such as the articulated robot of figure 1, presents a kinematic chain with various degrees of freedom between a stationary base and an end element; the end element may be a turning axis, a body with a degree of freedom of linear displacement, etc.

Figure 1 shows in a very schematic manner, only the characteristics of robot R which are necessary to understand the movement between the presses; for a more detailed description of the structure of a robot of this type, it is possible to refer, for example, to the cited patent application.

As can be seen from figure 1, which shows three successive positions of robot R, conventionally, a gripping end element T is coupled to the sixth axis of robot R, which in this case is a gripper with a vacuum gripping system to hold the part to be transferred.

An "internal" type movement to transfer the part from press P1 to press P2, is performed as follows. On the left of the figure, the gripper T is in the position of picking the part from press P1; next, through simultaneous turns, around the first axis, E1 and the sixth axis E6, in the senses indicated by the figure's arrows, the robot makes the gripper turn following a trajectory, essentially horizontal, which is between the sixth axis and the base of the robot. In the position shown on the right of figure 1, the robot has completed the movement and the gripper releases the part, in a position that is turned 180°, on press P2.

As already mentioned, with this conventional movement there is the inconvenience of the part turning when it leaves one press and it enters the next one, in such a way that the time that the press must remain open is relatively long.

To reduce this inconvenience, in accordance with an embodiment of the invention, the auxiliary device 1 shown in the scheme of figure 2 is coupled to the robot's sixth axis: in this embodiment, the auxiliary device 1 comprises a rigid arm 10, which is fixed in rotation to the E6 axis of the robot, near one of its ends, and presents on the opposite end a turning support 11, designed to be coupled to the end element T.

Support 11 can turn with respect to arm 10 actuated by a motor 12, that can be mounted on the arm 10 itself, preferably, as shown in figure 2, near the end of the robot's sixth axis E6. The rotation of motor 12 is transmitted throughout the length of the arm to the support 11 by means of any suitable type of transmission (not shown), for example, a cogged belt, bar or endless screw.

In this way, the robot is provided with an additional degree of freedom or "seventh axis", actuated independently of the sixth axis E6.

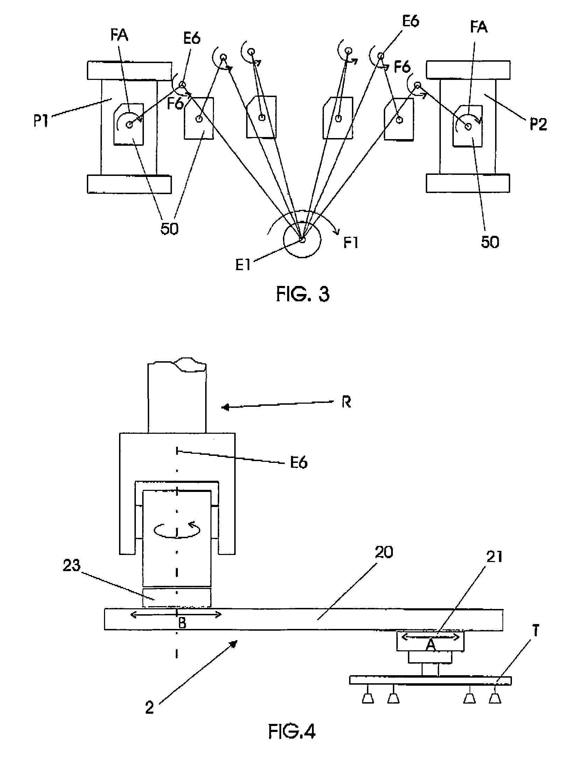

Due to this "seventh axis ", with device 1 coupled to the sixth axis E6 of a robot in the situation of figure 1 it is possible to transfer a part between the two presses with a turn of the "internal" type and linear extraction and insertion in the presses, as explained below with reference to figure 3; this figure shows different positions of the movement of a robot R fitted with the device of figure 2, which transfers a part 50.

On the left of figure 3 the robot is shown in the position of picking the part 50 from press P1. In the extraction movement, axes E1 and E6 of the robot turn as shown by the arrows F1 and F6, respectively, in a similar manner as described for figure 1; in addition, on device 1, the support 11 that holds the gripper with the part 50 turns in the sense indicated by the arrow FA, synchronised with the turn of the axis E6, in such a way that this turn FA of the support 11 compensates the turn of the axis E6 and as a combination of the two rotations the part does not turn in relation to the presses, but rather is transferred in parallel to the line that joins the two presses.

Consequently, the extraction of the part from the press P1 is linear, and the extraction time is less than in the case of figure 1.

The insertion of the part in press P2 is done in an analogous manner, with a linear movement of the part 50 due to the turn FA of the support 11 which compensates the turn of the axis E6. Consequently, the time for inserting the part into the press is less than in the case of figure 1.

Additionally, part 50 is inserted in press P2 with the same orientation as it had in press P1; in other words, as opposed to what occurred in figure 1, the part is not left turned 180°.

We should also note that the arm 10, which must travel the space beneath the press, can be made of materials of relatively low hardness, such as aluminium, and at the same time be sufficiently rigid, without having to have a height that impedes or hinders overlapping the presses' opening and closing with the manoeuvres for extracting and inserting the part, because it has no intermediate articulation; for its part, the motor is maintained at all times outside of the press.

Figure 4 shows a device for handling parts which is not in accordance with the invention.

In this figure, the auxiliary device 2 comprises a rigid arm 20, in relation to which the support 21, intended to hold the gripper or end element T, can travel. A motor (not shown) makes it possible to displace the support throughout the length of arm 20, as shown by arrow A.

The arm 20 is linked to the sixth axis E6 of the robot in such a way that it can turn in unison with said axis and can also travel in relation to it: for this purpose, it has a guide element 23 coupled in rotation to the axis E6 in relation to which the arm 20 can travel as shown by arrow B. Actuating the arm's movement throughout the guide element 23 can be done from the same motor which moves the support 21, with the appropriate transmission.

Preferably, the actuating motor is not assembled on arm 20, but rather on the handler; the motor's rotation is transmitted to the arm 20 and to the support 21 through an appropriate transmission, for example a pulley and cogged belt. The movements of the support 21 in relation to the arm 20 and of the arm 20 in relation to the guide element 23 are made preferably at the same speed.

By adding the device of figure 4 to a robot such as the one of figure 1 also achieves a combination of linear extraction and insertion trajectories, provided in this case by the displacement of the arm 20 in relation to the 6^{th} axis and the displacement of the support 21 in relation to the arm 20, with a reduced overall cycle time.

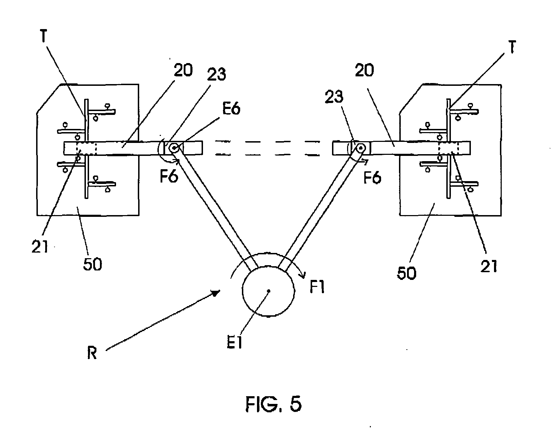

Figure 5 shows the two end positions of an operation to transfer a part 50 from one press to another one with a robot which has coupled to its sixth axis E6 a device such as the one of figure 4.

On the left of figure 5 the robot is shown in the position of picking the part 50 from one press. In the extraction movement, the robot's axes E1 and E6 turn as indicated by arrows F1 and F6, in such a way that the arm 20 of device 2 maintains its orientation; additionally, on device 2, the support 21 which holds the gripper T travels to the right along the length of arm 20, and at the same time the arm 20 travels towards the right with respect to axis E6. Consequently, the part 50 is extracted from the press in a linear fashion.

When the robot completes its turn around the axis E1 (position represented on the right of figure 5), the arm 20 has travelled in such a way that the E6 axis has passed from one end to the other end of it, and the support 21 with the gripper T has also reached the opposite end of the arm 20, and loading of part 50 on the next press has also been performed in a linear manner.

Also in this case, the entry of motors and other hard elements into the presses' zone of influence has been prevented, although the height of arm 20 will be in general superior to the one of arm 10 of the device of figure 2; and the orientation of part 50 has also been maintained.

We should highlight that all of the constructive details of the described devices, such as materials, transmissions, motors and similar may be of any type, depending on the specific requirements of each case, and that the expert in the matter may substitute the described technical elements with other equivalent ones without abandoning the scope of protection defined by the enclosed claims.

Likewise, it is evident that the devices in accordance with the invention and the handlers to which they are coupled may incorporate any other elements appropriate to their functioning such as may be sensors, control and synchronisation elements, etc.

In the examples contained in this description, we have described devices coupled to the sixth axis of an articulated six-axis robot; however, clearly any other robot, such as a four-axis or two-axis robot, is appropriate for the coupling of a device in accordance with the invention.

In the same way, the devices may be associated to handlers that work, as in the preceding figures, on loading and unloading between two stations, but also to handlers only for loading or only for unloading, or to handlers that work between a press and a store room, etc.

At the same time, some devices in accordance with the invention may be coupled to another type of handler for loading and unloading parts on presses whose end element is not a turning axis, but has a linear displacement: in the case of a device such as the one shown in figure 4, the guide element 23 would couple to the end element of the handler's kinematic chain, and a greater speed of extraction or insertion of the part in the press would be achieved.

Finally, we should mention that the described devices may be used not only for loading and/or unloading operations in presses, but also for any other operation with handlers which have compatible characteristics.

## Claims

1. Device (1) for handling parts, comprising:
a rigid arm (10) provided with coupling means for coupling the device to an industrial handler (R) that presents a kinematic chain between a base and an end element and for allowing the device to rotate integrally with the end element of the handler (R);
a support (11) rotatably mounted on the rigid arm (10) and designed to be rigidly coupled to a gripping element (T) for the parts to be handled; and
driving means for rotating the support (11) in relation to the rigid arm (10), said driving means comprising a motor (12) mounted at one end of the arm (10) near said coupling means and a transmission through the length of the arm (10), wherein said coupling means are located between the support (11) and the motor (12).

2. Device according to claim 1, **characterised in that** it comprises means for rotating the support (11) synchronised with the rotation of the end element (E6) and in opposite direction, in such a way that the turn of the support (11) compensates the turn of the end element (E6) and as a combination of the two rotations the gripping element (T) does not turn.

3. Device according to one of claims 1 or 2, **characterised in that** the axis of rotation of the support (11) in relation to the arm (10) is parallel to the axis of rotation of the end element of the handler (R).

4. Device according to claims 1, **characterised in that** said transmission comprises a mechanism selected from a cogged belt, bar or endless screw.

5. Industrial handler (R) having a kinematic chain between a base an end element, **characterised in that** it comprises a device (1) according to any of claims 1 to 4 linked to said end element (E6).

6. Handler (R) according to claim 5, **characterised in that** it comprises an articulated robot of at least two axes (E1, E6).

7. Handler (R) according to claim 6, **characterised in that** it comprises an articulated robot of four or six axes (E1-E6).

## Patentansprüche

1. Vorrichtung (1) zur Handhabung von Teilen, umfassend:
einen starren Arm (10), der mit Kopplungsmitteln versehen ist, um die Vorrichtung an einem industriellen Handhabungsgerät (R) anzukoppeln, das eine kinematische Kette zwischen einer Basis und einem Endelement aufweist, und um zu ermöglichen, dass sich die Vorrichtung ganz mit dem Endelement des Handhabungsgeräts (R) dreht;
einen Lager (11), der drehbar auf dem starren Arm (10) montiert ist und dafür ausgebildet ist, um starr an ein Greifelement (T) für die zu handhabende Teile angekoppelt zu werden; und
Betätigungselemente, um den Lager (11) in Bezug auf den starren Arm (10) zu drehen, wobei die genannten Betätigungselemente einen Motor (12) umfassen, der an einem Ende des Arms (10) in der Nähe der genannten Kopplungsmitteln montiert ist, und ein Getriebe durch die Länge des Arms (10), wobei sich die genannten Kopplungsmitteln zwischen dem Lager (11) und dem Motor (12) befinden.

2. Vorrichtung nach Anspruch 1, **dadurch gekennzeichnet, dass** sie Mitteln umfasst, um den Lager (11) mit der Drehung des Endelements (E6) synchronisiert und in entgegengesetzter Richtung zu drehen, so dass die Drehung des Lagers (11) die Drehung des Endelements (E6) ausgleicht, und als Kombination beider Drehungen sich das Greifelement (T) nicht dreht.

3. Vorrichtung nach einem der Ansprüche 1 oder 2, **dadurch gekennzeichnet, dass** die Drehachse des Lagers (11) in Bezug auf den Arm (10) parallel zur Drehachse des Endelements des Handhabungsgeräts (R) ist.

4. Vorrichtung nach Anspruch 1, **dadurch gekennzeichnet, dass** das genannte Getriebe einen aus einem Zahnriemen, einer Stange oder einer Schnecke ausgewählten Mechanismus umfasst.

5. Industrielles Handhabungsgerät (R), welches eine kinematische Kette zwischen einer Basis und einem Endelement hat, **dadurch gekennzeichnet, dass** es eine Vorrichtung (1) nach irgendeinem der Ansprüche 1 bis 4 umfasst, die an das genannte Endelement (E6) verbunden ist.

6. Handhabungsgerät (R) nach Anspruch 5, **dadurch gekennzeichnet, dass** es einen Gelenkroboter aus mindestens zwei Achsen (E1, E6) umfasst.

7. Handhabungsgerät (R) nach Anspruch 6, **dadurch gekennzeichnet, dass** es einen Gelenkroboter aus vier oder sechs Achsen (E1-E6) umfasst.

## Revendications

1. Dispositif (1) pour manipuler des pièces comportant:
un bras rigide (10) pourvu de moyens d'accouplement pour accoupler le dispositif à un manipulateur industriel (R) présentant une chaîne cinématique entre une base et un élément d'extrémité et permettant que le dispositif tourne solidairement avec l'élément d'extrémité du manipulateur (R);
un support (11) monté tournant sur le bras rigide (10) et destiné à être rigidement accouplé à un élément de serrage (T) pour les pièces à manipuler; et
des moyens d'entraînement pour faire tourner le support (11) par rapport au bras rigide (10), ces moyens d'entraînement comportant un moteur (12) monté à une extrémité du bras (10) près de ces moyens d'accouplement et une transmission tout le long du bras (10) où ces moyens d'accouplement sont situés entre le support (11) et le moteur (12).

2. Dispositif conformément à la revendication 1, **caractérisé en ce qu'**il comporte des moyens pour faire tourner le support (11) synchronisé avec la rotation de l'élément d'extrémité (E6) et en direction inverse, de sorte que le tour du support (11) compense le tour de l'élément d'extrémité (E6) et comme les deux rotations sont combinées, l'élément de serrage (T) ne tourne pas.

3. Dispositif conformément à une des revendications 1 ou 2, **caractérisé en ce que** l'axe de rotation du support (11) par rapport au bras (10) est parallèle à l'axe de rotation de l'élément d'extrémité du manipulateur (R).

4. Dispositif conformément à la revendication 1, **caractérisé en ce que** cette transmission comporte un mécanisme choisi entre une chaîne dentée, une barre ou une vis sans fin.

5. Manipulateur industriel (R) ayant une chaîne cinématique entre une base et un élément d'extrémité, **caractérisé en ce qu'**il comporte un dispositif (1) conformément à une quelconque des revendications 1 à 4 reliées à cet élément d'extrémité (E6).

6. Manipulateur (R) conformément à la revendication 5, **caractérisé en ce qu'**il comporte un robot articulé à au moins deux axes (E1, E6).

7. Manipulateur (R) conformément à la revendication 6, **caractérisé en ce qu'**il comporte un robot articulé à quatre ou six axes (E1-E6).
